(19) Europäisches Patentamt
European Patent Office
Office européen des brevets

(11) EP 0 930 579 B1

(12) EUROPEAN PATENT SPECIFICATION

(45) Date of publication and mention
of the grant of the patent:
**10.07.2002  Bulletin 2002/28**

(51) Int Cl.$^7$: **G06K 7/10**

(21) Application number: **99101022.4**

(22) Date of filing: **10.04.1992**

(54) **Ringscanner**

Ring scanner

Scanner à placer sur un anneau

(84) Designated Contracting States:
**AT DE ES FR GB IT**

(30) Priority: **13.05.1991  US 699417**

(43) Date of publication of application:
**21.07.1999  Bulletin 1999/29**

(62) Document number(s) of the earlier application(s) in
accordance with Art. 76 EPC:
**92106285.7 / 0 513 530**

(73) Proprietor: **SYMBOL TECHNOLOGIES, INC.**
**Holtsville, New York 11742-1300 (US)**

(72) Inventors:
• **Metlitsky, Boris**
  **Stony Brook, New York 11790 (US)**
• **Swartz, Jerome**
  **Old Field, New York 11733 (US)**

• **Sandor, Joseph**
  **Balboa Island, CA 92662 (US)**
• **Krichever, Mark**
  **Hauppauge, New York 11788 (US)**
• **Barkan, Edward**
  **Miller Place, York 11764 (US)**
• **Shepard, Howard**
  **Great River, New York 11739 (US)**

(74) Representative: **Wagner, Karl H., Dipl.-Ing. et al**
**WAGNER & GEYER**
**Patentanwälte**
**Gewürzmühlstrasse 5**
**80538 München (DE)**

(56) References cited:
**EP-A- 0 341 717      EP-A- 0 373 935**
**EP-A1- 0 414 452      EP-A2- 0 194 115**
**WO-A1-88/02520      US-A- 4 766 299**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

This invention generally relates to laser scanner systems for reading indicia of different light reflectivity such as bar code symbols.

Typically, a light source such as a laser generates a light beam which is optically modified to form a beam spot of a certain size at the working distance and is directed by optical components along a light path toward a bar code symbol located in the vicinity of the working distance for reflection from the symbol. A photodetector having a field of view extending across and slightly past the symbol detects light of variable intensity reflected off the symbol and generates electrical signals indicative of the detected light. These electrical signals are decoded into data descriptive of the symbol. A scanning component is situated in the light path. The scanning component may either sweep the beam spot across the symbol and trace a scan line across and past the symbol, or scan the field of view of the photodetector, or do both.

The components for the light scanning system, including the light source, optics, photodetector, scanning component and an electrical conductor, are mounted together in a common assembly to constitute a compact, lightweight, scan module. The scan module is mounted in an interchangeable, modular manner in housings of different configurations.

For example, the housing can be hand-held and shaped as a cylinder in a so-called flashlight-type configuration, or shaped as a box, or shaped with a gun-like configuration. The housing can be mounted on the back of an operator's arm (see, for example, U.S. 4,766,299). The housing can be mounted on the operator's arm, typically adjacent or on the wrist. The housing can be mounted in a countertop workstation. The housing can be mounted in a mobile cart, or shopping cart, or, in some cases, even in a stationary installation.

The compact, lightweight nature of the scan module enables myriad other housing configurations to be fashioned. Thus, the scan module can be mounted anywhere on an operator's person, e.g. in a helmet to be worn on the operator's head, in eyeglasses to be worn in front of the operator's eyes, in a shoulder or body harness, etc.

Regarding the prior art, documents EP-A-0 341 717 and EP-A-0 414 452 disclose a hand-held bar code reader which is to be held in one hand of the operator thus occupying this hand. According to document US-A-4,766,299 a bar code reader scanner device is worn on the back of the hand of the user by means of a strap. Flexing of the hand will pull the strap which in turn switches on the scanner device for scanning a bar code. Thus, the hand cannot be used for handling an item during scanning. Moreover, prolonged use of the scanner device will result in fatigue of the hand muscles and strain of the ligaments, ultimately leading to tendovaginitis.

EP-A-0 373 935 starts from the prior art according to US-A-4 766 299 and suggests as an improvement mounting of the scanning means in an elongated housing wherein the housing is attached by means of a strap to the underside of the wrist of a operator. Switch means are remotely positioned from the housing, the switch means comprising a ring member which fits on the forefinger of one of the operator's hands and a press button switch member which is adapted to be operated by the thumb of the same hand. A cable connects the switch means to the scanning means. However, this arrangement is quite cumbersome and provides little freedom for the hand, the wrist of which carries the scanning means.

The problem underlying the present invention is to provide a scanner arrangement which still further facilitates scanning of a coded label e. g. on a purchased item. The operator should be enabled to use freely both hands for handling the item on which the label to be scanned is located.

The solution to their problem is defined in claim 1 which reflects in its first part the prior art disclosed in US-A-4 766 299.

BRIEF DESCRIPTION OF THE DRAWINGS

FIG. 1A is a partly broken-away, partly sectioned side view of a known hand-held light scanning system, in which a mirrorless scanner arrangement is housed;
FIG. 1B is an end view of FIG. 1A;
FIG. 2 is a front perspective view of the mirrorless scanner arrangement of FIG. 1A;
FIG. 3 is a partly sectioned side view of another mirrorless scanner arrangement;
FIG. 4 is a diagrammatic top plan view of the embodiment of FIG. 3 depicting its operation;
FIG. 5 is a partly sectioned side view of another mirrorless scanner arrangement;
FIG. 6 is an enlarged view taken on line 6--6 of FIG. 5;
FIG. 7 is a diagrammatic top plan view of arrangement of FIG. 5 depicting its operation at two end-limiting positions.
FIG. 8 is a rear perspective view of the mirrorless scanner arrangement of FIG. 2 as employed in a multi-axis scanning system;
FIG. 9 is partly broken-away perspective view of a further mirrorless scanner arrangement;
FIG. 10 is a side view of still another mirrorless scanner arrangement;
FIG. 11 is a sectional view taken along line 12--12 of FIG. 10 ;
FIG. 12 is a cross-sectional view of an alternate spring for use in the arrangement of FIGs. 10 and 11;

FIG. 13 is a sectional view taken on line 14--14 of FIG. 15;

FIG. 14 is an end view of the arrangement of FIG. 15;

FIG. 15 is a top plan view of a further scanner arrangement;

FIG. 16 is a view analogous to FIG. 13, but of another mirrorless scanner arrangement;

FIG. 17 is a view analogous to FIG. 13, but of still another mirrorless scanner arrangement;

FIG. 18 is a view analogous to FIG. 13, but of yet another mirrorless scanner arrangement;

FIG. 19 is a side view of a finger-held, ring-type scanning arrangement according to the present invention.

<u>DETAILED DESCRIPTION OF THE DRAWINGS</u>

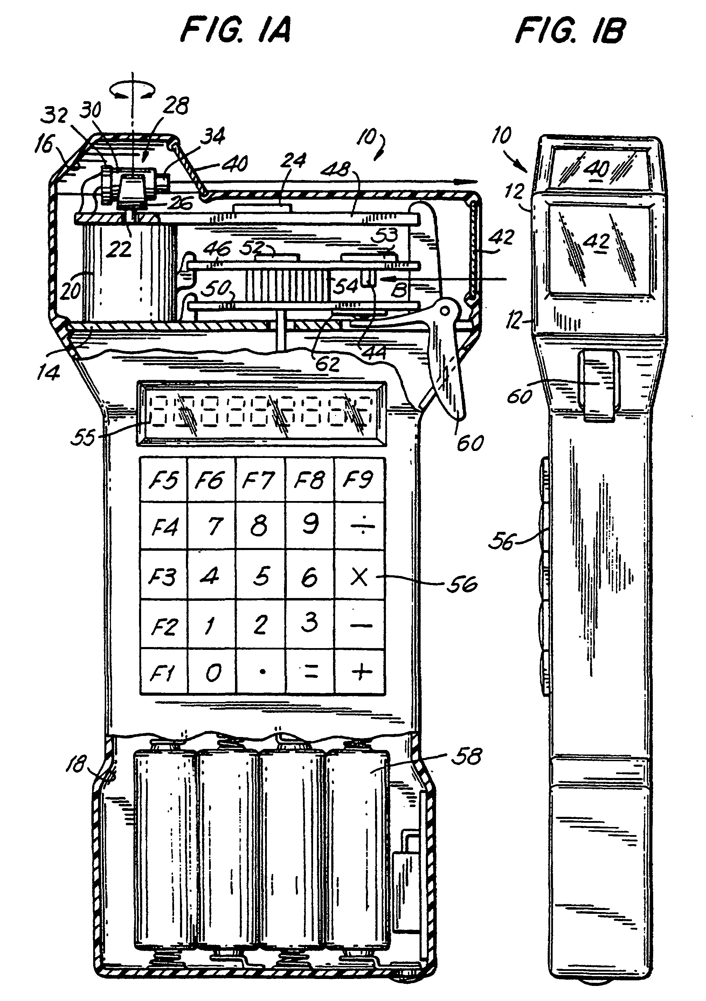

Reference numeral 10 in FIGs. 1A and 1B generally identifies an arrangement in a scanner system as known from EP-A-0 341 717, for reading symbols, particularly UPC bar code symbols. As used in this specification and the following claims, the term "symbol" is intended to be broadly construed and to cover not only symbol patterns composed of alternating bars and spaces, but also other patterns, as well as alpha-numeric characters and, in short, any indicia having portions of different light reflectivity.

The arrangement 10 comprises a hand-held housing 12 having a base 14 which subdivides the interior of the housing into an upper half 16 and a lower half 18. A lightweight, high-speed, miniature scanning motor 20 similar to that described in U.S. Pat. No. 4,496,831 is mounted on base 14. The motor 20 has an output shaft 22 which is repetitively driven in alternate circumferential directions about an axis along which the shaft extends over arc lengths less than 360° in each direction. Structural, functional and operational aspects of the motor 20 and of control circuitry 24 for the motor are set forth in detail in U.S. Pat. No. 4,496,831.

Instead of a planar mirror as taught by said patent, in FIG. 1A, a generally U-shaped support 26 is mounted at the end of the shaft 22, and a laser/optics subassembly 28 is mounted on the support 26. The subassembly 28 and the support 26 are jointly oscillated and turned with the shaft 22.

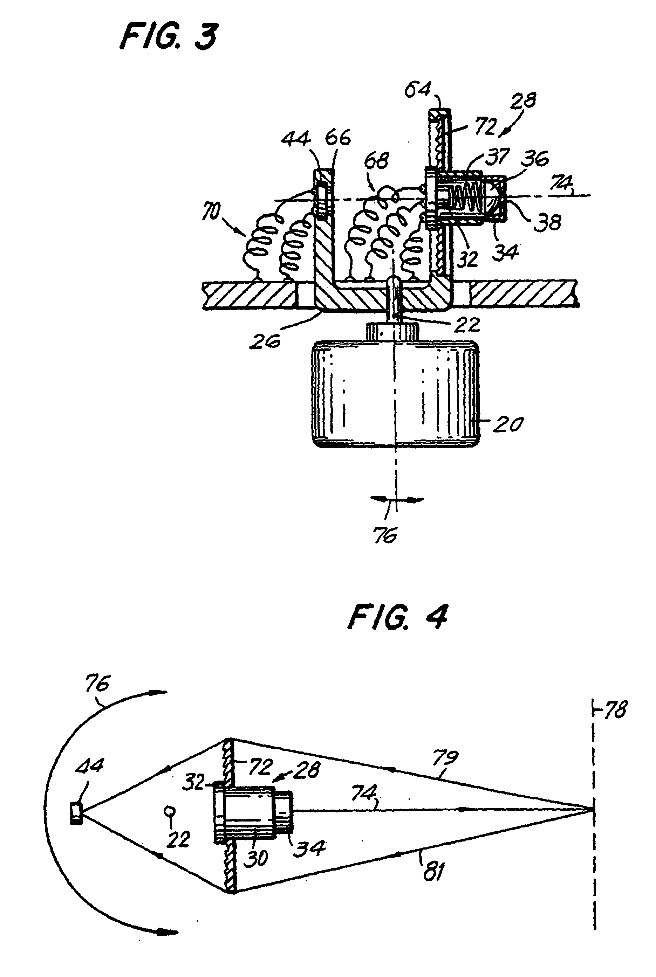

The subassembly 28 includes an elongated hollow tube 30, a laser diode 32 fixedly mounted at one axial end region of the tube 30, a lens barrel 34 mounted at the opposite axial end region of the tube 30, and a focusing lens 36 mounted within the barrel (see FIG.3). The focusing lens 36 is preferably a plano-convex lens, but may be spherical, convex or cylindrical as well. The barrel 34 has an end wall formed with an aperture stop 38 which is an opening extending through the end wall. The barrel 34 is mounted for longitudinal telescoping movement within and along the tube 30. The lens 36 is situated adjacent the end wall of the barrel and is mounted for joint movement with the barrel. The position of the barrel and, in turn, of the lens relative to the diode is fixed typically by gluing or clamping; at the assembly site so that a known distance between the lens and the aperture stop, on the one hand, and between the lens, the aperture stop and the diode, on the other hand, is obtained. A coil spring 37 (see FIG. 3) is located within and extends along the barrel and tube, and has one coil end bearing against the diode, and another coil end bearing against a planar side of the lens. The spring urges the lens against the end wall having the aperture stop, thereby fixedly locating the lens relative to the aperture stop.

The subassembly 28 includes a solid-state laser diode 32 operative for propagating and generating an incident laser beam, either in the invisible or visible light range, and the combination of a focusing lens and an aperture stop together operative for focusing the laser beam to have a beam cross-section or beam spot of a certain waist size within a range of working distances relative to the housing 12. The focused beam passes through the aperture stop 38 and through a scan window 40 on the housing in the vicinity of a reference plane located exteriorly of the housing within the range of working distances along an outgoing optical path.

During the alternate, repetitive oscillations of the shaft 22, the support 26 and the subassembly 28 likewise participate in this oscillatory movement, thereby causing the beam spot to be swept in an arc whose center of curvature is located at the diode across the symbol at the reference plane and to trace a curved scan line thereat. Hence, no longer is a mirror used to effect sweeping of a beam spot across a symbol, but, instead, other scanner components are moved and, in the embodiment of FIG. 1A, these other components comprise the laser diode 32 and the optical components which are jointly turned as a unitary structure about an axis parallel to the reference plane.

A portion of the light reflected off the symbol passes along a return path through a second window 42 on the housing in the direction of arrow B to a photodetector 44 for detecting the variable intensity of the returning portion of the reflected laser light over a field of view, and for generating an electrical analog signal indicative of the detected variable light intensity. In the FIG. 1A embodiment, the photodetector 44 is stationarily mounted on the printed circuit board 46. Printed circuit boards 48 and 50 at either side of board 46 contain signal processing circuitry 52 and microprocessor control circuitry 53 for converting the analog electrical signal to a digital signal, and for processing the digital signal to data descriptive of the symbol being read.

A two-part multi-wire plug-in cable connector 54 has one part electrically connected to the signal processing and microprocessor control circuitry and another part electrically connected to a flexible multi-wire cable 54' connected to a display 55 and a keyboard 56. A rechargeable battery pack 58 supplies power to the laser diode and the electrical circuitry in the housing. By moving only the laser diode and the optical component relative to the stationary photodetector, power from the battery pack is conserved.

Means for initiating reading may advantageously include a trigger 60 mounted on the housing 12. The trigger extends in part outwardly of the housing to be manually actuated by a user who is holding the housing 12 in his hand. The trigger is operatively connected through trigger switch 62 and actuates the laser diode 32, the motor 20, the photodetector 44, the signal processing circuitry 52 and the control circuitry 53 to initiate a reading of the symbol. The trigger is actuated once for each symbol to be read, each symbol in its respective turn. Once the control circuitry determines that the symbol has been successfully decoded, the control circuitry terminates the reading of the symbol and deactuates the previously actuated components in the housing and readies the system for the next symbol.

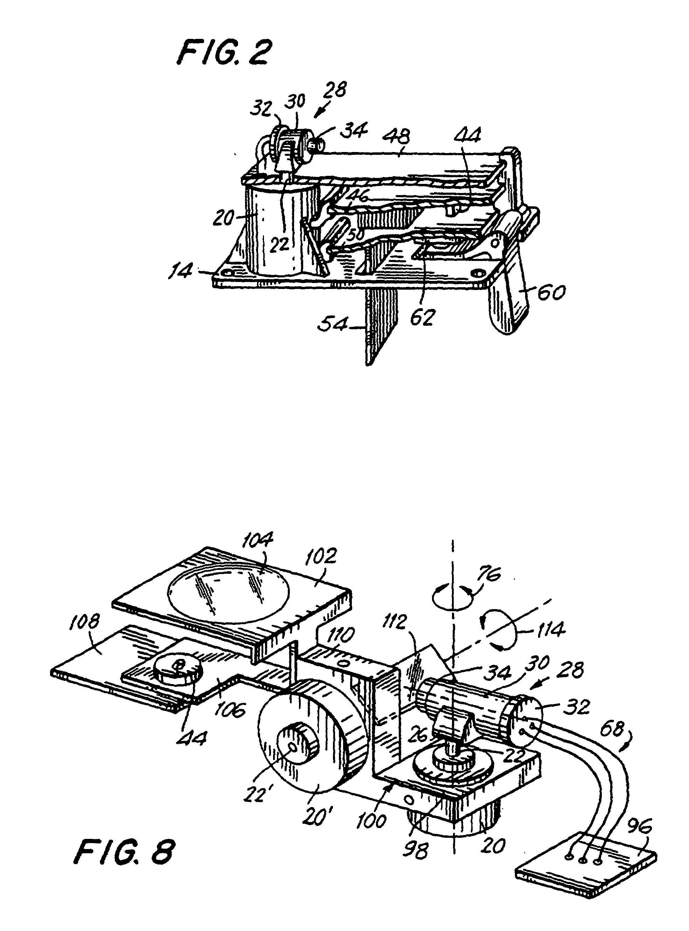

FIG. 2 illustrates the various electrical, mechanical and optical components assembled as a modular unit prior to mounting in the upper half 16 of the housing 12 of FIGs. 1A, 1B. The electrical circuitry on the printed circuit boards 46, 48, 50, as well as on base 14, has been omitted from FIG. 2 for the sake of clarity.

Turning now to FIG. 3, like parts with that of FIG. 1A have been identified with like reference numerals. The oscillating motor 20, once again, has an output shaft 22 on which a generally U-shaped support 26 is mounted. A laser/optics subassembly 28 is mounted on one leg 64 of the support. A photodetector 44 is mounted on another leg 66 of the support. Coiled tensile wire groups 68, 70 connect the diode 32 and the photodetector 44 to the non-illustrated electrical circuitry on printed circuit board 48. Although coiled wires have been illustrated, other types of electrical connectors, e. g. flat cable, could be employed. A collecting lens 72 is mounted on leg 64 and coaxially surrounds subassembly 28. The lens 72, the subassembly 28 and the photodetector 44 all have a common boresight or optical axis 74 along which the optical and return paths are colinear, and are all oscillatable as a unit in alternate circumferential directions (see double-headed arrow 76 in FIG. 4) about the axis along which shaft 22 extends.

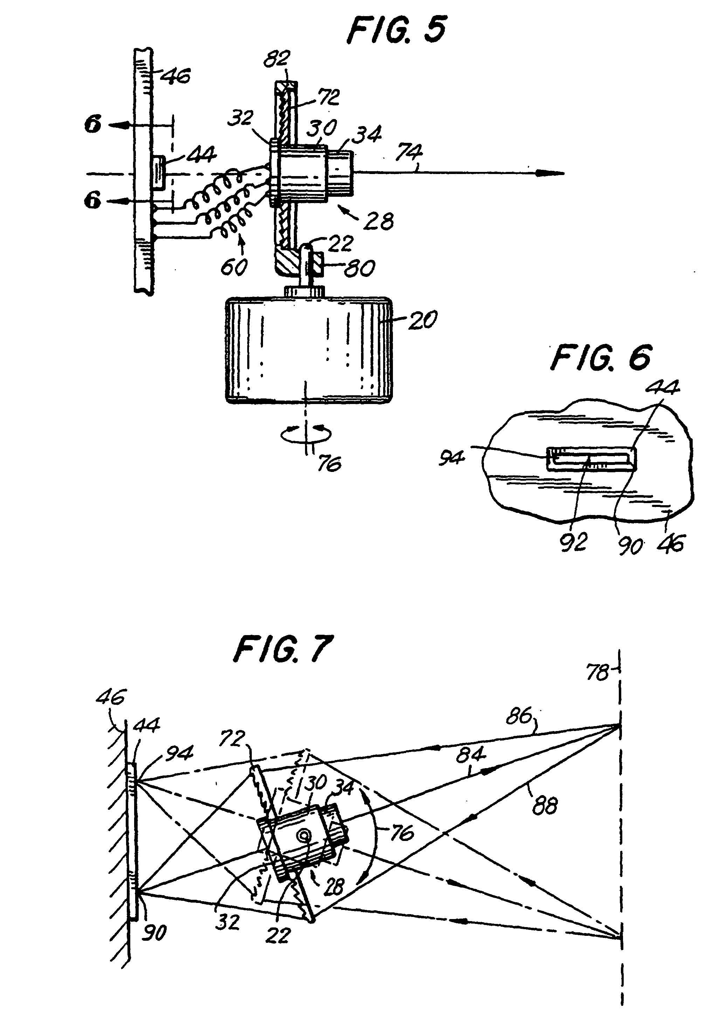

The operation of the arrangement of FIG. 3 is schematically shown in FIG. 4. An incident laser beam is emitted from the subassembly 28. In a center position, this beam is directed along optical axis 74 to a reference plane 78 at which a symbol is located. Light is scattered in all directions from the symbol. A portion of the reflected light, as represented by light rays 79,81, is incident on collecting lens 72, e.g. a Fresnel lens, and focused onto an inlet of the photodetector 44. The inlet may be round, square or rectangular (see FIG.6). As the unit turns in the direction of either arrow 76, the beam spot at the reference plane likewise moves across the symbol. The returning light is always focused onto the inlet of the photodetector.

The arrangement of FIG. 3 is retro-reflective because not only the incident beam, but also the field of view of the photodetector, are being simultaneously scanned across the symbol. By contrast, the FIGS. 1A, 1B arrangement is a so-called "flying spot" scanner, because only the incident beam is being swept across the symbol, the photodetector being stationary.

Turning now to the arrangement of FIGs. 5-7, like reference numerals again identify like parts. The oscillating motor 20, once again, has an output shaft 22 on which a support 80 is mounted. Rather than being U-shaped like support 26, support 80 is L-shaped and has an upright leg 82. A laser/optics subassembly 28 is mounted on leg 82. A photodetector 44 is stationarily mounted on printed circuit board 46. Coiled tensile wire group 68 interconnects the diode 32 and electrical circuitry on board 46. Collecting lens 72 is mounted on leg 82 in a coaxially surrounding relationship with subassembly 28. The lens 72 and the subassembly 28 turn as a unit in either direction of double-headed arrow 76, whereas photodetector 44, in contrast to the previous embodiment of FIG. 3, is stationary.

As schematically shown in FIG. 7, an incident light beam emitted from subassembly 28 is directed in one end-limiting position along optical axis 84 to impinge on a symbol located at the reference plane 78, whereupon a portion of the reflected light, as represented by light rays 86, 88, is incident on collecting lens 72 and focused at one end 90 of an elongated slot-like inlet 92 of the photodetector 44, best shown in FIG. 6. At an opposite end-limiting position, shown in phantom lines in FIG. 7, the collected portion of reflected light is focused at an opposite end 94 of the inlet 92. Between end-limiting portions, the collected, focused light travels lengthwise along the inlet 92.

The FIGs. 5-7 arrangement is another retro-reflective arrangement, because both the incident beam is being swept across the symbol, and the field of view of the photodetector is likewise being swept across the symbol at the same time due to the movement of the collecting lens. The collecting lens could be eliminated by having the output power of the light source sufficiently high.

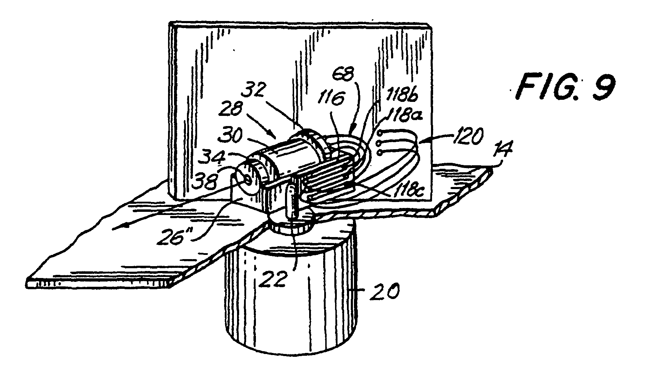

The various arrangements described so far, provide a single curved trace or scan line in one direction across the symbol being read. FIG. 8 shows an arrangement for generating a scan pattern extending in more than one direction over the symbol. Thus, as before, motor 20 repetitively drives output shaft 22, support 26 and laser/optics subassembly 28 in the alternate directions indicated by arrows 76. Tensile wire group 68 interconnects the diode 32 with a low voltage power supply 96. The motor and its superstructure are mounted on a horizontal platform 98 of a base 100.

The base has additional platforms for other components. Thus, horizontal platform 102 supports a collecting lens 104. Platform 106 supports a photodetector 44 on an upper surface, as well as a printed circuit board 108 on which signal processing circuitry is mounted on a lower surface.

A second motor 20' identical to motor 20 is mounted on a vertical platform 110 and has an output shaft 22' which is at right angles to shaft 22. Instead of the aforementioned superstructure, a planar mirror 112 is mounted at one end of shaft 22', thereby being similar to the scanning element described in U.S. Pat. No. 4,496,831. The motor 22' drives the mirror 112 in alternate circumferential directions as indicated by double-headed arrow 114.

In operation, with motors 22, 22' both oscillating the components mounted on their shafts, a scan pattern composed of multiple lines is generated over the symbol. Thus, with motor 20 generating a single scan line along an X-axis direction, motor 20' will move the single scan line along a Y-axis, thereby generating a set of mutually parallel lines extending across the pattern. By varying the speed, direction and frequency of the motors 20, 20', complex scan patterns, e.g. Lissajous patterns, can be generated.

Due to the oscillatory movement of the laser/optics subassembly 28, the tensile wires 68 interconnecting the diode and its power supply 96 are subjected to considerable stress. The mechanical integrity of the wire joints is weakened by such stress forces generated while the subassembly changes directions. Generally speaking, these stress forces are proportional to the distance between the shaft 22 and the point of the wire attachment to the subassembly.

FIG. 9 shows an arrangement wherein the wire joints between the diode and its power supply are positioned in the immediate vicinity of the shaft, thereby minimizing the stress forces acting to weaken such joints and maximizing the working lifetime of the arrangement.

Thus, a support block 26" is mounted on the shaft 22, but off to one side of the shaft. The subassembly 28 is mounted on the block 26". A printed circuit board 116 is mounted at the side of the block facing the shaft 22. The board 116 has three printed conductive strips 118a, 118b, 118c extending along the board 116. The laser diode. 32 has a first group of wires 68 connected to respective ends of the strips; and a second group of wires 120 is connected to respective opposite ends of the strips and to the power supply 96. The subassembly 28, the board 116 and the first group of wires 68 are jointly oscillated. The second group of wires 120 is subjected to stress forces, but, as shown, the wire joints at the opposite ends of the strips are immediately adjacent the shaft 22 so that the magnitude of the stress forces is much reduced as compared to the situation wherein the first group of wires 68 were directly connected to the power supply 96.

As described so far, the laser diode/optics subassembly 28 by itself or with the photodetector 44 is turned about an axis to effect a scanning or sweeping action. It is also possible to move the focusing lens 36 either by itself or with the aperture stop 28 relative to the diode 32 in a plane generally parallel to the light-emitting outlet of the diode.

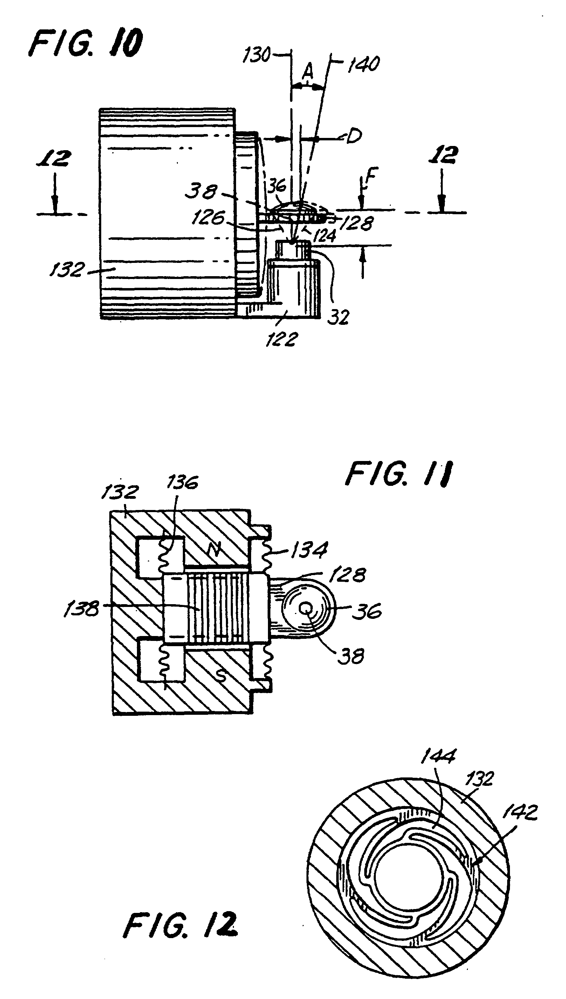

Turning to FIG. 10, the laser diode 32 is stationarily mounted on a support 122. The diode 32 emits along optical axis 130 a wide-angle fan-shaped laser beam schematically represented by light rays 124, 126. The fan-shaped beam diverges at different angles in both orthogonal planes extending parallel to the plane of the diode outlet and perpendicular to the optical axis 130. The focusing lens 36 is mounted in a holder 128 at a fixed distance of focal length F as measured along axis 130, from the diode. The holder has an opening centered on the axis 130, the opening serving as the aperture stop 38.

The holder 128, as shown in FIG. 11, extends into a permanent magnet casing 132. A pair of convoluted diaphragm suspension springs 134, 136 support the holder 128 on the magnet casing 132. A voice coil 138 surrounds the holder 128 inside the casing 132 and is bounded by north N and south S poles of the casing.

By electrically energizing the coil 138, the holder and, in turn, the lens and the aperture stop are made to jointly reciprocate back and forth in a plane perpendicular to axis 130 due to electromagnetic attraction and repulsion forces generated at the coil. If the deflection of the lens and aperture stop as measured from the axis 130 to one end-limiting position is denoted D, then it can be shown that the deflected laser beam represented by light ray 140 is shifted by an angular distance $A = \tan^{-1}\frac{D}{F}$.

FIG. 12 shows an alternate to the convoluted springs 134, 136. A so-called "spider" spring 142 having curved legs 144 could also be used.

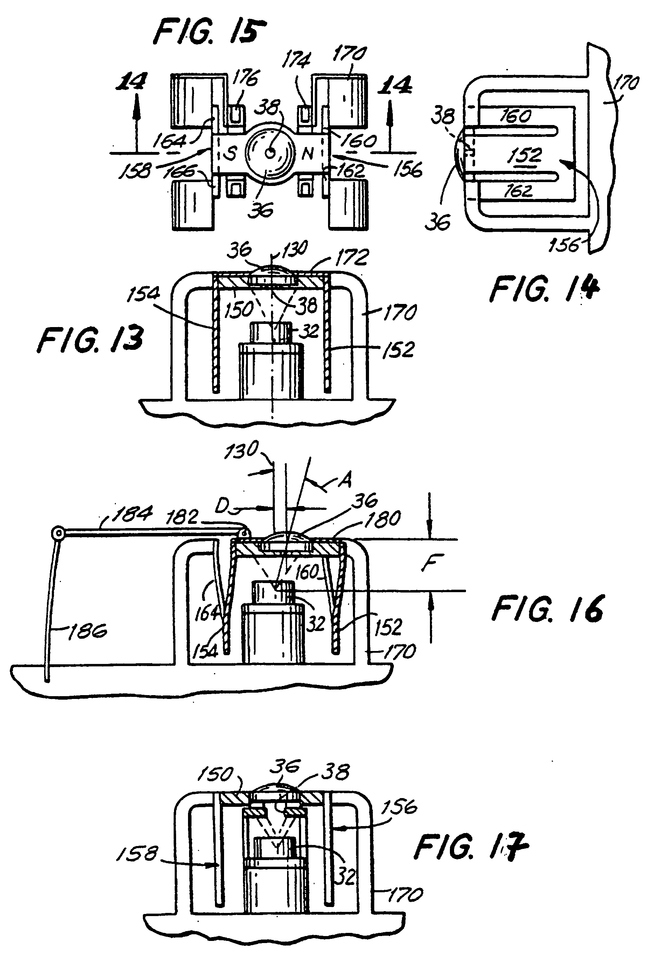

FIG. 13 shows another arrangement for reciprocally shifting the lens 36 and aperture stop 38 in a plane parallel to the plane of the outlet of the diode 32. The lens 36 is mounted on a bridge support 150 which spans the distance between, and is carried by, two center legs 152, 154 of E-shaped leaf springs 156, 158. Outer legs 160, 162 of spring 156 and outer legs 164, 166 of spring 158 are stationarily connected to an overhead support frame 170.

The bridge support 150 has an opening centered on optical axis 130, the opening serving as the aperture stop 38. A permanent magnet strip 172 having a north N pole at one end and a south S pole at an opposite end is carried by the bridge support. A pair of driving coils 174, 176 surrounds each pole.

In operation, each driving coil is electrically energized. Electromagnetic attraction and repulsion forces are generated by magnetic interaction between the coils and the poles N, S, thereby causing the bridge support to be reciprocally shifted in a plane perpendicular to axis 130. FIG. 13 shows this arrangement in a center, non-shifted position. By contrast, the FIG. 16 arrangement described below illustrates a shifted position. It will be noted that only the upper ends of the center legs of the E-springs are displaced. A substantially constant distance between the lens and aperture stop combination and the diode is maintained. Proper laser beam focus at the reference plane is thus maintained thereat.

As before, the shifting of the lens and aperture stop causes the laser beam emitted by the diode to be deflected at an angle $A = \tan^{-1}\frac{D}{F}$. The beam spot is moved along an arc around a center of curvature at the lens. It is possible, by having unequal lengths or stiffnesses in the legs of the springs, to have the beam spot moved in a desired manner across the symbol. For example, the spot can be moved in a straight line.

Rather than using electromagnetic means, other means can be used to displace the lens and aperture stop. FIG. 16 shows an arrangement identical to FIG. 13, but, instead of the magnetic strip 172, a plate 180 is connected to the bridge support. The plate 180 has a lug 182 to which a drive bar 184 is pivotally connected. The bar 184 can be connected to a pure mechanical drive, an electro-mechanical drive, or a piezoelectric substrate, i.e. a transducer operative for converting electrical to mechanical energy, to effect the reciprocal movement.

In another variant, the center legs 152, 154 of the springs can be made of one bi-metallic material while the outer legs are made of another bi-metallic material. Heating all the legs would cause the center legs to be displaced relative to the outer legs.

In FIGs. 13-16, since the aperture stop 38 moves with the lens 36, the output power of the laser beam will decrease at the ends of the scan line, because the intensity of the unfocused laser beam is brightest on the axis 130. This loss of power at the ends of the scan could be compensated electrically by sensing the output power of the beam, or the light reflected off the rear surface of the aperture stop, and by adjusting the electrical supply current to the laser diode so as to maintain a constant power output.

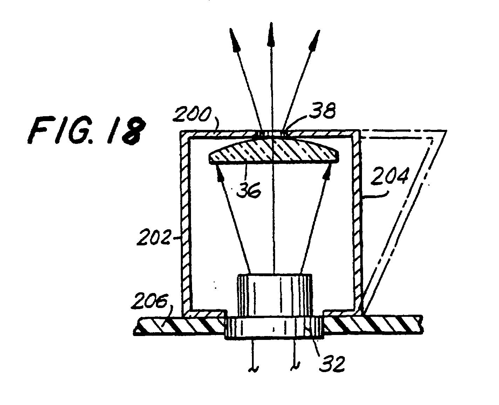

Another approach is shown in FIG. 17, wherein the aperture stop 38 is held stationary, and only the focusing lens 36 is reciprocally shifted. Since the laser beam does not pass through the center of the lens 36 when the lens is shifted off axis, the deflection or scan angle A is amplified. Light passing through the lens off the axis 130 has more optical aberrations, but they have not been found to be significant for bar code reading applications.

The low mass of the moving structure, i.e. the lens alone; the lens and aperture stop together; the lens, aperture stop and diode jointly; and the lens, aperture stop, diode and. photodetector jointly, enables the system to operate at resonance for low power applications, as well as off resonance. Very high scanning speeds on the order of 40 scans per second and more are obtainable due to the low mass of the moving structure.

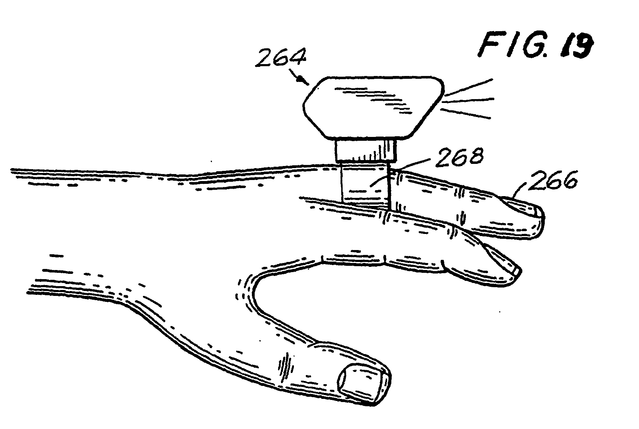

Yet another approach is shown in FIG. 18, wherein the focusing lens 36 is held stationary, and only the aperture stop 38 is reciprocally shifted. The aperture stop 38 is formed as an opening in a top wall 200 that is positioned by side walls 202, 204 at a distance from a support 206 on which the laser diode 32 is mounted. The apertured top wall 200 is shiftable to the left and to the right, as indicated by the phantom lines, by any reciprocating drive, e.g. an electromagnet or piezo-electric drive. Bimorph material can also be used for the walls 200, 202, 204 to move the aperture stop in a plane in front of the lens 36.

Turning now to FIG. 19, a finger-held housing 264 containing the scanning arrangement is supported on at least one of the user's fingers 266 by a ring-like support 268. The outgoing light beam passes over the user's fingers and, as before, reading can be automatically or manually initiated.

## Claims

1. A light scanning arrangement for reading indicia having parts of different light reflectivity, the arrangement comprising:

   (A) a light source component for emitting a light beam;
   (B) an optical component for optically modifying and directing the light beam along an optical path toward indicia located in the vicinity of a reference plane exteriorly of the arrangement;
   (C) a photodetector component having a field of view and operative for detecting at least a portion of light of variable intensity reflected off the indicia, and for generating an electrical signal indicative of the detected light intensity;
   (D) a scanning component for scanning at least one of the light beam and the field of view;
   (E) an electrical connecting component for conducting the electrical signal away from the photodetector component;

   wherein all of said components are mounted together in a common housing to constitute a compact, lightweight scan module;
   **characterized in that** the housing is provided with means adapted to support the housing on a finger of the user of the scanning arrangement.

2. The arrangement as recited in claim 1, **characterized in that** the supporting means includes a ring that at least partially encircles the user's finger.

3. The scanning arrangement of claim 1 or 2, wherein said light source component and said scanning component are implemented on a single semiconductor and/or electrooptical substrate.

4. The scanning arrangement of one of claims 1 to 3, further comprising:

   a window in said housing transmitting the light beam directed toward said indicia and the light reflected from said indicia.

## Patentansprüche

**1.** Eine Lichtabtastanordnung zum Lesen von Anzeigemitteln mit Teilen unterschiedlicher Lichtreflektivität, wobei die Anordnung folgendes aufweist:

(A) Eine Lichtquellenkomponente zum Emittieren eines Lichtstrahls;

(B) eine optische Komponente zum optischen Modifizieren und zum Leiten des Lichtstrahls entlang eines optischen Pfades zu den Anzeigemitteln angeordnet in der Nähe einer Bezugsebene außerhalb der Anordnung;

(C) eine Fotodetektorkomponente mit einem Sichtfeld und operativ zum Detektieren von mindestens einem Teil des Lichtes variabler Intensität reflektiert von den Anzeigemitteln und zur Erzeugung eines elektrischen Signals welches die detektierte Lichtintensität angibt;

(D) eine Abtastkomponente zum Tasten von mindestens dem Lichtstrahl oder mindestens dem Gesichtsfeld oder von beiden;

(E) eine elektrische Verbindungskomponente zum Leiten des elektrischen Signals weg von der Fotodetektorkomponente;

wobei sämtliche Komponenten zusammen in einem gemeinsamen Gehäuse angebracht sind um ein kompaktes leichtes Abtastmodul zu bilden; **dadurch gekennzeichnet, dass** das Gehäuse mit Mitteln versehen ist, die geeignet sind um das Gehäuse an einem Finger des Benutzers der Abtastanordnung zu tragen.

**2.** Anordnung nach Anspruch 1 **dadurch gekennzeichnet, dass** die Tragmittel einen Ring aufweisen, der mindestens teilweise den Finger des Benutzers umgibt.

**3.** Abtastanordnung nach Anspruch 1 oder 2, wobei die Lichtquellenkomponente und die Abtastkomponente in einem einzigen Halbleiter und/oder elektrooptischen Substrat implementiert sind.

**4.** Abtastanordnung nach einem der Ansprüche 1 bis 3, wobei ferner folgendes vorgesehen ist:

Ein Fenster in dem Gehäuse zur Übertragung des Lichtstrahls, gerichtet auf die Anzeigemittel und des Lichtes reflektiert von den Anzeigemitteln.

## Revendications

**1.** Dispositif de balayage optique pour lire des signes ayant des parties de réflectivités optiques différentes, le dispositif comprenant :

(A) un composant formant source de lumière pour émettre un faisceau lumineux ;

(B) un composant optique pour modifier et diriger optiquement le faisceau lumineux le long d'un chemin optique vers des signes se trouvant au voisinage d'un plan de référence extérieur au dispositif ;

(C) un composant photodétecteur ayant un champ de vue et ayant pour fonction de détecter au moins une partie d'une lumière d'intensité variable réfléchie par les signes, et de générer un signal électrique représentatif de l'intensité lumineuse détectée ;

(D) un composant de balayage pour animer d'un mouvement de balayage au moins l'un du faisceau lumineux et du champ de vue ;

(E) un composant de connexion électrique pour acheminer le signal électrique à distance du composant photodétecteur ;

dans lequel tous lesdits composants sont montés ensemble dans un boîtier commun destiné à constituer un module de balayage léger et compact ;

**caractérisé en ce que**

le boîtier est muni d'un moyen apte à supporter le boîtier sur le doigt d'un utilisateur du dispositif de balayage.

**2.** Dispositif selon la revendication 1, **caractérisé en ce que** le moyen de support comporte une bague qui entoure au moins partiellement le doigt de l'utilisateur.

**3.** Dispositif de balayage selon la revendication 1 ou 2, dans lequel ledit composant formant source de lumière et ledit composant de balayage sont réalisés sur un semiconducteur unique et/ou sur un substrat électro-optique.

**4.** Dispositif de balayage selon l'une des revendications 1 à 3, comprenant en outre :

une fenêtre ménagée dans ledit boîtier et transmettant le faisceau lumineux dirigé vers lesdits signes et la lumière réfléchie par lesdits signes.

## FIG. IA

## FIG. IB

The keypad shown in FIG. 1A:

| F5 | F6 | F7 | F8 | F9 |
|----|----|----|----|----|
| F4 | 7 | 8 | 9 | ÷ |
| F3 | 4 | 5 | 6 | X |
| F2 | 1 | 2 | 3 | − |
| F1 | 0 | · | = | + |

FIG. 2

FIG. 8

EP 0 930 579 B1

**FIG. 3**

**FIG. 4**

10

FIG. 5

FIG. 6

FIG. 7

FIG. 9

FIG. 10

FIG. 11

FIG. 12

FIG. 15

FIG. 14

FIG. 13

FIG. 16

FIG. 17

FIG. 18

*FIG. 19*